# EUROPÄISCHE PATENTANMELDUNG

(11) **EP 0 949 141 A1**
(43) Veröffentlichungstag der Anmeldung: **13.10.1999**
(21) Anmeldenummer: 99101831.8
(22) Anmeldetag: 28.01.1999
(51) Int. Cl.: B62M 11/04, B62M 9/04, B62L 1/00

(54) **Mehrgangnabe zur fliegenden Befestigung eines Laufrades an einem Fahrzeug, insbesondere einem Fahrrad**

(30) Priorität: 09.04.1998 DE 19815940
(71) Anmelder: SRAM Deutschland GmbH, 97404 Schweinfurt (DE)
(72) Erfinder: Thieler, Wolfgang, Dipl.-Ing. (FH), 97437 Hassfurt-Uchenhofen (DE); Steuer, Werner, 97422 Schweinfurt (DE); Nürnberger, Günther, Dipl.-Ing. (FH), 97422 Schweinfurt (DE)

(57) **Zusammenfassung**

Mehrgangnabe zur fliegenden Befestigung eines Laufrades an einem Rahmenteil (33) eines Fahrzeuges, insbesondere eines Fahrrades, mit einer Nabenhülse (17), die ein Getriebe (11) mit einem Antreiber (8) umschließt und gegenüber einer Nabenachse (1) drehbar gelagert ist, wobei die Nabenhülse (17) eine Bremseinrichtung (32) enthalten kann, wobei ferner Betätigungselemente zur Steuerung des Getriebes (11), jenseits des Rahmenteils (33) angeordnet sein können, wobei weiter die Nabenhülse (17) mit einer das Laufrad mitgestaltenden Speichenhülse (18) verbindbar ist, wobei schließlich die Speichenhülse (18) zur vorteilhaft vereinfachten Montage mittels einer Schraubverbindung zu einer Hülseneinheit mit der Nabenhülse (17) verbunden werden kann.

## Beschreibung

Die Erfindung betrifft eine Mehrgangnabe zur fliegenden Befestigung eines Laufrades an einem Rahmenteil eines Fahrzeuges, insbesondere eines Fahrrades gemäß dem Oberbegriff des Anspruches 1.

Eine Mehrgangnabe für Fahrräder oder dergleichen, insbesondere für Fahrstühle, für Vorwärts- und Rückwärtsfahrt sowie für Bremsung ist aus der DE 35 37 851 C2 bekannt geworden. Es handelt sich um eine nur geringfügig modifizierte Dreigangnabe für Fahrräder, die in großen Serien hergestellt wird. Die Aufgabe der Erfindung, nämlich eine Nabe für Vorwärts- und Rückwärtsfahrt sowie für Bremsung zu schaffen, bei der die Bremsvorrichtung bei Vorwärtsfahrt sicher außer Eingriff gehalten ist und bei Einleitung der Bremsung oder Rückwärtsfahrt die Bremsvorrichtung sicher auch bei langsamen Bewegungen in Eingriff bringbar ist, wird nur teilweise sauber gelöst, da durch die Einleitung der Bremsung axiale Verschiebungen mit Einleitung von axialen Kräften auf einen Gegenbremskonus ausgeübt werden, die mit hohen Reibungsverlusten verbunden sind, und die einwandfreie Übertragung der Reaktionskräfte auf einen Rahmenteil des Fahrzeuges erschwert. Außerdem ist die fliegende Befestigung der Mehrgangnabe über ein Achsende an einem Rahmenteil des Fahrzeuges nicht stabil genug, da die Achse der serienmäßigen Dreigangnabe für eine beidseitige Befestigung in einem Fahrradrahmen konstruiert ist. Daran ändert auch die massive Ausführung eines Bremshebels nichts, der das Rahmenteil mit dem Gegenbremskonus verbindet.

Zur besseren Befestigung einer Mehrgangnabe an dem Rahmenteil eines Fahrzeuges, insbesondere eines Fahrrades wird demgegenüber vorgeschlagen, die Achse mit einer Verdickung zu versehen, die gleichzeitig ein mit dem Rahmenteil verbindbares Profil aufweist. Ferner wird vorgeschlagen, rahmenseitig sowohl den Antrieb, die Bremsbetätigung sowie die Betätigung des Getriebes anzuordnen, wobei die Mehrgangnabe an ihrem vom Rahmenteil weggewandten Seite eine leicht von Hand bedienbare Befestigungseinrichtung aufweist, die es erlaubt, einen Radwechsel von Hand ohne Demontage der Mehrgangnabe vom Rahmenteil vorzunehmen.

Es ist daher die Aufgabe der Erfindung, eine Mehrgangnabe zur fliegenden Befestigung des Laufrades an einem Rahmenteil eines Fahrzeuges, insbesondere eines Fahrrades, derart zu gestalten, daß die Achse ein Höchstmaß an Verbiegesteifigkeit aufweist, daß ein Radwechsel ohne Zuhilfenahme von Werkzeug möglich ist, daß der Antrieb und die Betätigung einer Bremse vom rahmenseitigen Ende der Mehrgangnabe erfolgen, und daß die Steuerung des Getriebes der Mehrgangnabe von der dem Rad abgewandten Seite des Rahmenteils erfolgt.

Die Lösung der Aufgabe wird in den Kennzeichen der Ansprüche 1, 5 und 16 beschrieben. Ausgestaltungen sind den Unteransprüchen zu entnehmen.

Anhand von Zeichnungen wird ein Ausführungsbeispiel einer Mehrgangnabe zur fliegenden Befestigung an einem Rahmenteil eines Fahrzeuges beschrieben. Es zeigen:
- Fig. 1: einen Teilschnitt durch eine Mehrgangnabe mit fliegender Befestigung an einem Rahmenteil mit einer Nabenhülse und einer Speichenhülse;
- Fig. 2: die Nabenhülse in Verbindung mit der Speichenhülse sowie deren Verbindungselemente im Schnitt.

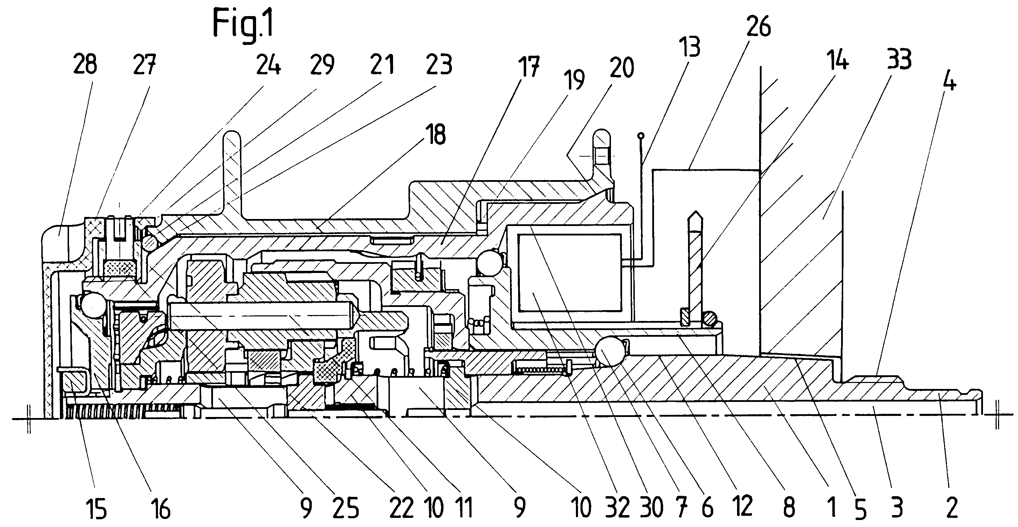

Gemäß Fig. 1 wird mit 1 eine Nabenachse bezeichnet, die in einem Rahmenteil 33 über ein Profil 5 befestigbar ist. Das Profil 5 besteht vorzugsweise aus einem Konus, der mittels einer Befestigungsmutter auf einem Gewinde 4 in dem Rahmenteil 33 befestigbar ist. Auf der Nabenachse 1 ist ein Getriebe 11 angeordnet, welches durch eine Zentralbohrung 3 in der Nabenachse 1 über Schaltelemente 10 steuerbar ist. Die Schaltelemente 10 sind in Durchbrüchen 9 der Nabenachse 1 angeordnet, wobei die Schaltelemente 10 über die rahmenseitig offene Zentralbohrung 3 mit hier nicht dargestellten Betätigungselementen verbunden sind, die von der Bedienungsperson des Fahrrades betätigt werden können. Ferner ist auf der Nabenachse 1 ein Antreiber 8 drehbar gelagert, welcher gemeinsam mit einem Lagerschild 16 die Lagerbasis für eine Nabenhülse 17 darstellt, die das Getriebe 11, den Antreiber 8 sowie die Nabenachse 1 rotationssymmetrisch umschließt. Die Lagerung der Nabenhülse 17 ist über den Lagerschild 16 einstellbar, wobei die Spielfreiheit der gesamten Lagerung also auch die eines rahmenseitigen Lagers 7 durch Aufschrauben des Lagerschildes 16 auf die Nabenachse 1 erfolgt, wobei der Lagerschild 16 mittels einer Mutter 15 gekontert werden kann. Während das Profil 5 das Rahmenteil 33 durchragt, können die Betätigungselemente auf einem Befestigungssitz 2 derart befestigt werden, daß sie auf der dem Laufrad gegenüberliegenden Seite angeordnet sind und somit vor äußeren Einflüssen, wie z. B. Beschädigung, Schmutz u. ä. geschützt sind.

Ein rahmenseitiges Lager 7 zur Lagerung des Antreibers 8 weist eine Lagerlaufbahn 6 auf, die derart angeordnet ist, daß sich rahmenseitig eine Verdickung 12 anordnen läßt, die ein hohes Maß an Biegebelastbarkeit aufweist, um ausreichend Stabilität bei Querkräften auf das Laufrad zu garantieren.

Wie bereits vorher erwähnt, hat die Nabenachse 1 parallel zueinander verlaufende Durchbrüche 9, die die Biegebelastbarkeit der Nabenachse 1 herabsetzen, wobei die Nabenachse einer Biegebelastung mehr Widerstand entgegenbringt, wenn diese Biegebelastung quer zu dem Verlauf der Durchbrüche erfolgt. Es wird somit vorgeschlagen, die Nabenachse 1 am Rahmenteil 33 derart zu montieren, daß die Durchbrüche in einer horizontalen Ebene bezogen auf das stehende Fahrrad verlaufen, wodurch diese im Bereich einer neutralen Zone angeordnet sind, da die Querkräfte auf das Laufrad von seiner Berührungsstelle mit der Fahrbahn ausgehen.

Während auf dem Antreiber 8 ein Antriebsteil 14, insbesondere ein Ritzel für eine Antriebskette, angeordnet ist, ist innerhalb der Mehrgangnabe eine Bremseinrichtung 32 angeordnet, welche durch eine Betätigungseinrichtung 13 betätigt werden kann, wobei sich eine Reibung zwischen der Bremseinrichtung 32 und einer Bremsfläche 30 in der Nabenhülse 17 ergibt, während sich das Reaktionsmoment in der Bremseinrichtung 32 über eine Abstützeinrichtung 26 auf das Rahmenteil 33 ableiten läßt.

Die Nabenhülse 17 ist von einer Speichenhülse 18 umgeben, die mit dem Laufrad verbunden ist und eine lösbare Verbindung mit der Nabenhülse 17 aufweist. Die Speichenhülse 18 läßt sich auf die Nabenhülse 17 axial aufschieben, wobei mindestens ein Konus 20 für die Zentrierung und mindestens ein Fügeprofil 19 für die Drehmomentübertragung zwischen den beiden Hülsen 17 und 18 sorgt.

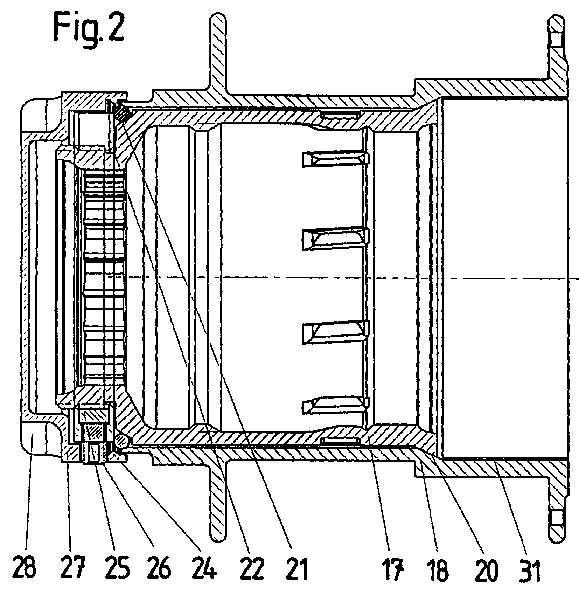

Während gemäß Fig. 1 die Bremsfläche 30 mit der Nabenhülse 17 verbunden ist, ist gemäß Fig. 2 eine Bremsfläche 31 mit der Speichenhülse 18 verbunden, wobei die Nabenhülse 17 im Bereich des Konus 20 endet. Eine von mehreren Möglichkeiten der Zentrierung der Speichenhülse 18 auf der Nabenhülse 17 ist die Anordnung eines Ringes 21, der mit Hilfe einer Axialkraft zwischen die beiden Hülsen 17 und 18 gepreßt wird, wobei die innere Nabenhülse 17 eine äußere Schräge und die äußeren Speichenhülse 18 eine innere Fase zur Ausbildung einer V-Nut 23 trägt. Die axiale Anpreßkraft für den Ring 21 wird durch eine Zentriermutter 22 erzeugt, die mit einer Abdeckkappe 27 in Verbindung steht, welche Griffmulden 28 aufweist, die am äußeren Rand der Abdeckkappe 27 angeordnet sind. Es ist vorteilhaft, die einmal in Anpreßposition gebrachte Zentriermutter 22 an dieser Stelle zu arretieren, was beispielsweise durch die Anordnung eines Klemmkörpers 25 erreicht werden kann, der durch mindestens eine Schraube 24 mit der Nabenhülse 17 in Klemmverbindung gebracht werden kann. Die Abdeckkappe weist im Bereich ihrer Berührung mit der Speichenhülse 18 eine Dichtlippe 29 auf, die beim Aufschrauben der Abdeckkappe 27 auf die Nabenhülse 17 mit dem Ende der Speichenhülse 18 in Berührung kommt und das Nabeninnere gegen Schmutz abdichtet. Vorzugsweise überlappt die Dichtlippe 29 einen Absatz der Speichenhülse 18, wobei die Berührung einen Preßsitz ausbildet.

Der Vorteil einer derart ausgestalteten fliegend am Rahmenteil 33 angeordneten Mehrgangnabe liegt nicht nur in der geschützten Anordnung sowohl der Betätigungseinrichtung 13 für die Bremseinrichtung 32 und des Antriebsteils 14, insbesondere des Ritzels auf dem Antreiber 8, sondern auch in der vom Laufrad weggewandten Anordnung der Betätigungselemente für die Steuerung des Getriebes 11 über die Schaltelemente 10.

### Bezugszeichenliste

- 1.: Nabenachse
- 2.: Befestigungssitz
- 3.: Zentralbohrung
- 4.: Gewinde für Befestigungsmutter
- 5.: Profil
- 6.: Lagerlaufbahn
- 7.: rahmenseitiges Lager
- 8.: Antreiber
- 9.: Durchbruch
- 10.: Schaltelement
- 11.: Getriebe
- 12.: Verdickung
- 13.: Betätigungseinrichtung
- 14.: Antriebsteil, insbesondere Ritzel
- 15.: Mutter
- 16.: Lagerschild
- 17.: Nabenhülse
- 18.: Speichenhülse
- 19.: Fügeprofil
- 20.: Konus
- 21.: Ring
- 22.: Zentriermutter
- 23.: V-Nut
- 24.: Schraube
- 25.: Klemmkörper
- 26.: Abstützeinrichtung
- 27.: Abdeckkappe
- 28.: Griffmulde
- 29.: Dichlippe
- 30.: Bremsfläche
- 31.: Bremsfläche
- 32.: Bremseinrichtung
- 33.: Rahmenteil

## Patentansprüche

1. Mehrgangnabe zur fliegenden Befestigung eines Laufrades an einem Rahmenteil (33) eines Fahrzeuges, insbesondere eines Fahrrades, mit einer Nabenhülse (17), die ein Getriebe (11) mit einem Antreiber (8) umschließt und gegenüber einer Nabenachse (1) drehbar gelagert ist, wobei die Nabenhülse (17) eine Bremseinrichtung (32) enthalten kann,
**dadurch gekennzeichnet,**
daß das Getriebe (11) vom rahmenseitigen Ende der Mehrgangnabe aus gesteuert wird, wobei insbesondere die Nabenachse (1) eine zum rahmenseitigen Ende der Mehrgangnabe hinweisende offene Zentralbohrung (3) aufweist, durch die das Getriebe (11) mit Hilfe von mindestens einem Schaltelement (10) steuerbar ist, wodurch Betätigungselemente, die zur Betätigung der Schaltelemente (10) und somit zum Steuern des Getriebes (11) erforderlich sind, jenseits des Rahmenteils (33) angeordnet werden können.

2. Mehrgangnabe nach Anspruch 1,
**dadurch gekennzeichnet,**
daß die Nabenachse (1) im Anschluß an ein rahmenseitiges Lager (7) eine Verdickung (12) mit einem Profil (5) zur Befestigung der Nabenachse (1) am Rahmenteil (33) aufweist.

3. Mehrgang nach Anspruch 1 oder 2,
**dadurch gekennzeichnet,**
daß das getriebeseitige Ende der Verdickung (12) als eine Lagerlaufbahn (6) zur Lagerung des Antreibers (8) ausgestaltet ist.

4. Mehrgangnabe nach einem der Ansprüche 1 bis 3,
**dadurch gekennzeichnet,**
daß das Profil (5) derart ausgebildet ist, daß die Nabenachse (1) in höchstens zwei Positionen, nämlich in denen ihrer höchsten Biegebelastbarkeit am Rahmenteil (33), anbringbar ist.

5. Mehrgangnabe zur fliegenden Befestigung eines Laufrades an einem Rahmenteil (33) eines Fahrzeuges, insbesondere eines Fahrrades, mit einer Nabenhülse (17), die ein Getriebe (11) mit einem Antreiber (8) umschließt und gegenüber einer Nabenachse (1) drehbar gelagert ist, wobei die Nabenhülse (17) eine Bremseinrichtung (32) enthalten kann,
**dadurch gekennzeichnet,**
daß das Laufrad mit einer Speichenhülse (18) eine Einheit bildet, wobei die Speichenhülse (18) mit der Nabenhülse (17) verbindbar ist.

6. Mehrgangnabe nach Anspruch 5,
**dadurch gekennzeichnet,**
daß die Speichenhülse (18) über eine mittelbare oder unmittelbare Steckverbindung (19) spielfrei und drehfest mit der Nabenhülse (17) verbindbar ist.

7. Mehrgangnabe nach Anspruch 5 oder 6,
**dadurch gekennzeichnet,**
daß die Speichenhülse (18) auf der Nabenhülse (17) durch einen vorzugsweise offenen Ring (21) zentriert wird, der mit Hilfe einer Axialkraft in eine V-Nut (23) gepreßt wird, die von je einer umlaufenden Schräge an der Nabenhülse (17) und an der Speichenhülse (18) gebildet wird.

8. Mehrgangnabe nach Anspruch 5 bis 7,
**dadurch gekennzeichnet,**
daß die Speichenhülse (18) mit dem Laufrad eine Einheit bildet.

9. Mehrgangnabe nach einem der Ansprüche 5 bis 8,
**dadurch gekennzeichnet,**
daß die Speichenhülse (18) aus Leichtmetall besteht, wobei Funktionsflächen eine Armierung mit härteren Metallen aufweisen können.

10. Mehrgangnabe nach einem der Ansprüche 5 bis 9,
**dadurch gekennzeichnet,**
daß die Speichenhülse (18) aus verstärktem Kunststoff besteht, wobei Funktionsflächen metallarmiert sein können.

11. Mehrgangnabe nach einem der Ansprüche 5 bis 10,
**dadurch gekennzeichnet,**
daß die Nabenhülse (17) aus Leichtmetall besteht, wobei die Funktionsflächen Armierungen mit härteren Metallen aufweisen können.

12. Mehrgangnabe nach einem der Ansprüche 1 bis 11,
**dadurch gekennzeichnet,**
daß die Nabenhülse (17) aus Stahl besteht.

13. Mehrgangnabe nach Anspruch 5 oder 6,
**dadurch gekennzeichnet,**
daß die Zentrierung der Speichenhülse (18) auf der Nabenhülse (17) durch mindestens einen Konus (20) bei Dauerwirkung einer axialen Haltekraft erfolgt.

14. Mehrgangnabe nach einem der Ansprüche 5, 6, und 13,
**dadurch gekennzeichnet,**
daß die axiale Haltekraft durch eine Schraubverbindung zwischen der Speichenhülse (18) und der Nabenhülse (17) erzeugt wird.

15. Mehrgangnabe nach einem der Ansprüche 5, 6, 13 und 14,
**dadurch gekennzeichnet,**
daß die Schraubverbindung zwischen entweder der Nabenhülse (17) oder der Speichenhülse (18) und einer griffgünstigen Abdeckkappe (27) erfolgt.

16. Mehrgangnabe nach Anspruch 15,
**dadurch gekennzeichnet,**
daß die Abdeckkappe (27) der Verschraubung nach Erreichung der axialen Haltekraft arretierbar ist.

17. Mehrgangnabe nach Anspruch 15 oder 16,
**dadurch gekennzeichnet,**
daß die Abdeckkappe (27) aus Kunststoff besteht, und eine umlaufende Dichtlippe (29) aufweist, die das Nabeninnere gegenüber der Speichenhülse (18) und/oder der Nabenhülse (17) abdichtet.

18. Mehrgangnabe zur fliegenden Befestigung eines Laufrades an einem Rahmenteil (33) eines Fahrzeuges, insbesondere eines Fahrrades mit einer Nabenhülse (17), die ein Getriebe (11) mit einem Antreiber (8) umschließt und gegenüber einer Nabenachse (1) drehbar gelagert ist, wobei die Nabenhülse (17) eine Bremseinrichtung (32) enthalten kann,
**dadurch gekennzeichnet,**
daß die Bremseinrichtung (32) vorzugsweise am rahmenseitigen Ende der Mehrgangnabe angeordnet ist.

19. Mehrgangnabe nach Anspruch 18,
**dadurch gekennzeichnet,**
daß eine Betätigungseinrichtung (13) zur Betätigung der Bremseinrichtung (32) am rahmenseitigen Ende der Mehrgangnabe angeordnet ist.

20. Mehrgangnabe nach Anspruch 18 oder 19,
**dadurch gekennzeichnet,**
daß die Bremseinrichtung (32) eine Reibungsbremse zwischen dem feststehenden Rahmenteil (33) einerseits und dem drehenden Laufrad andererseits ist, deren Bremsflächen (30) zwischen der Bremseinrichtung (32) und der Nabenhülse (17) angeordnet sind.

21. Mehrgangnabe nach einem der Ansprüche 18 bis 20,
**dadurch gekennzeichnet,**
daß die Bremseinrichtung (32) eine Reibungsbremse zwischen dem feststehenden Rahmenteil (33) einerseits und dem drehenden Laufrad andererseits ist, deren Bremsflächen (31) zwischen der Bremseinrichtung (32) und der Speichenhülse (18) angeordnet sind.
